# EUROPEAN PATENT APPLICATION

(11) **EP 4 835 104 A1**
(43) Date of publication of application: **04.11.2026**
(21) Application number: 24912354.8
(22) Date of filing: 10.12.2024
(51) Int. Cl.: C22B 23/02, C22B 1/243, C22B 3/04, C22B 5/10, C22B 23/00, C22C 33/04

(54) **SULFIDE PRODUCTION METHOD AND NICKEL SMELTING METHOD**

(30) Priority: 26.12.2023 JP 2023219341
(71) Applicant: SUMITOMO METAL MINING CO., LTD., Tokyo 105-8716 (JP)
(72) Inventor: ISEKI, Takashi, Tokyo 105-8716 (JP)
(74) Representative: Hirons, Daniel Stuart
(86) International application number: PCT/JP2024/043664
(87) International publication number: WO 2025/142465

(57) **Abstract**

The present invention provides a method for treating nickel oxide ore, the method capable of efficiently recovering nickel as the recovery target.

The present invention also provides a sulfide production method for producing sulfide from nickel oxide ore, the method comprising: a mixing treatment step for mixing nickel oxide ore with a reducing agent to obtain a mixture; a reducing step for charging the mixture into a reducing furnace and subjecting the mixture to a reduction process to obtain a reduction product containing a metal, which is ferro-nickel metal, and a slag, which is an oxide; a separation step for separating the metal and the slag from the reduction product; and a sulfurization step for adding a sulfurizing agent to the metal obtained in the separation step to obtain a sulfide containing nickel.

## Description

### TECHNICAL FIELD

The present invention relates to a sulfide production method for producing a sulfide from a nickel oxide ore, and a nickel smelting method.

### BACKGROUND ART

A dry smelting method of producing nickel matte by sulfurizing roasting together with sulfur using a smelting furnace, a dry smelting method of using a rotary kiln or moving hearth furnace and reducing using a reducing agent to produce an iron-nickel alloy (hereinafter also referred to as "ferro-nickel"), a wet smelting method of producing a mixed sulfide (mix sulfide) using an autoclave to leach nickel and/or cobalt with sulfuric acid and adding a sulfurizing agent to the obtained leachate have been known as nickel smelting methods for obtaining nickel from a nickel oxide ore also called limonite or saprolite.

For example, Patent Document 1 describes a valuable material recovery method from a precious metal-containing metal sulfide that selectively leaches to separate nickel, while air oxidizing metal sulfide matt with sulfides of nickel and copper as main components, using a predetermined equivalent of sulfuric acid relative to the nickel, and concentrates the precious metal together with copper sulfide in the leaching residue.

Patent Document 1 describes this valuable material recovery method being able to efficiently recover a valuable material component utilizing existing copper smelting equipment.

On the other hand, the amount of easily processable ore continues to decrease, and conventional smelting technology is approaching its limit due to decreasing nickel grade and high MgO content in the ores, and the smelting cost increasing. With the background of such a situation, technology has become necessary which recovers valuable metals such as nickel from ore that cannot be processed with the conventional technology.

When recovering valuable metals such as nickel using the conventional technology from a low-grade nickel oxide ore having such a low grade and high impurity content, the cost associated with the recovered valuable metals will increase. For example, with a dry smelting method that produces nickel matte by sulfurizing roasting together with sulfur using a smelting furnace, for example, if the Ni grade is not even a few percentage points, the melting energy for the slag component becomes enormous, and the sulfurization efficiency declines to being unprofitable. In the smelting method using a rotary kiln, if the nickel grade in the ore becomes 1.5% by mass or less, the ratio of slag component becomes great, and the heating energy proportionally becomes immense and is no longer profitable. In addition, even with the Elkem process using an electric furnace, if the Ni grade declines, the energy for melting the slag this proportion becomes enormous, and thus is no longer cost effective. With the wet processing using an autoclave, for example, if the MgO content in the ore exceeds 2% by mass, the cost of chemicals such as sulfuric acid becomes immense, and it is no longer possible to generate a profit.

A treatment method of nickel oxide ore that can efficiently recover valuable metals from low grade oxidized ores in this way has been demanded.

### Citation List

### Patent Documents

Patent Document 1: Japanese Unexamined Patent Application, Publication No. 2009-97076

### DISCLOSURE OF THE INVENTION

### Problems to be Solved by the Invention

The present invention has an object of providing a method for treating a nickel oxide ore that can efficiently recover nickel, which is the recovery target.

### Means for Solving the Problems

The present inventors have conducted intensive studies to solve the aforementioned problem. As a result, it was found that the above-mentioned problem could be solved by producing a sulfide by adding a sulfurizing agent to a metal obtained by conducting a reduction treatment on a mixture containing an oxidized ore and a reducing agent, thereby arriving at completion of the present invention.

A first aspect of the present invention relates to a sulfide production method of producing a sulfide from nickel oxide ore, the method including: a mixing treatment step of mixing a nickel oxide ore and a reducing agent to obtain a mixture; a reducing step of loading the mixture into a reducing furnace, and conducting a reduction treatment on the mixture to obtain a reduction product containing a metal, which is a ferro-nickel metal, and a slag, which is an oxide; a separation step of separating the metal and the slag from the reduction product; and a sulfurization step of adding a sulfurizing agent to the metal obtained in the separation step to obtain a sulfide containing nickel.

A second aspect of the present invention relates to the sulfide production method of the first aspect, in which the sulfurization step forms a sulfide layer between a molten metal and a gas-phase portion, by melting the metal using a melting furnace that employs a burner, and adding a sulfurizing agent to a molten metal.

A third aspect of the present invention relates to the sulfide production method of the first aspect, in which the sulfurization step melts the metal using an arc furnace, and adds a sulfurizing agent to a molten metal.

A fourth aspect of the present invention relates to the sulfide production method of the second aspect, in which the sulfurization step uses a fuel containing at least one selected from charcoal, coke and natural gas as a fuel of the burner.

A fifth aspect of the present invention relates to the sulfide production method of any one of the first to third aspects, in which the sulfurization step uses a solid sulfur or sulfur gas as the sulfurizing agent.

A sixth aspect of the present invention relates to the sulfide production method of any one of the first to third aspects, in which the reducing step loads the mixture into a reducing furnace and conducts a reduction treatment on the mixture to obtain a ferro-nickel metal, and supplies the ferro-nickel metal to the sulfurization step.

A seventh aspect of the present invention relates to a nickel smelting method including: a mixing treatment step of mixing a nickel oxide ore and a reducing agent to obtain a mixture; a reducing step of loading the mixture into a reducing furnace, and conducting a reduction treatment on the mixture to obtain a reduction product containing a metal, which is a ferro-nickel metal, and a slag, which is an oxide; a separation step of separating the metal and the slag from the reduction product; and a sulfurization step of adding a sulfurizing agent to the metal obtained in the separation step to obtain a sulfide; and a wet-process step of obtaining a leachate from the sulfide obtained in the sulfurization step.

### Effects of the Invention

According to the sulfide production method relating to the present invention, it is possible to efficiently recover nickel.

### BRIEF DESCRIPTION OF THE DRAWINGS

FIG. 1 is a process drawing showing an example of the flow of a sulfide production method; and
FIG. 2 is a view (plan view) showing a configuration example of a reducing furnace (rotary hearth furnace).

### PREFERRED MODE FOR CARRYING OUT THE INVENTION

Hereinafter, specific embodiments of the present invention will be described in detail. It should be noted that the present invention is not to be limited to the following embodiments, and various modifications within a scope not changing the gist of the present invention are possible thereto. In addition, in the present disclosure, the notation of "X~Y" (X and Y are any numerical values) has the meaning of "X or more and Y or less.

### <<1. Outline of Present Invention>>

A sulfide production method according to the present invention is characterized by including: a mixing treatment step of mixing a nickel oxide ore and a reducing agent to obtain a mixture; a reducing step of loading the mixture into a reducing furnace and conducting reduction treatment on the mixture; and a sulfurization step of adding a sulfurizing agent to a metal obtained in the reducing step to obtain a sulfide.

By mixing the oxidized ore and reducing agent to obtain a mixture in this way, and sulfurizing the metal obtained by conducting the reduction treatment on the mixture to obtain a sulfide, it is possible to efficiently recover valuable metal.

In addition, in the sulfurization step of sulfurizing the metal obtained by the reduction treatment, the metal may be melted using a melting furnace that employs a burner, and a sulfurizing agent may be added to the molten metal. By melting the metal using a melting furnace that employs a burner, and adding a sulfurizing agent to the molten metal, the metal containing a different metal than nickel such as iron can be separated, and it is possible to more efficiently recover nickel.

In addition, in the sulfurization step of sulfurizing the metal obtained from the reduction treatment, the metal may be melted using an arc furnace, and the sulfurizing agent may be added to the molten metal. By melting the metal using an arc furnace, and adding a sulfurizing agent to the molten metal, the metal containing a different metal than nickel such as iron can be separated, and it is possible to more efficiently recover valuable metal.

It should be noted that nickel, which is the recovery target contained in the sulfide, can be recovered by supplying the sulfide to a wet-process step, for example.

### <<2. Sulfide Production Method>>

Hereinafter, a specific embodiment of the present invention (hereinafter referred to as "present embodiment") will be described by giving an example of a sulfide production method for producing a sulfide from a nickel oxide ore using a nickel oxide ore as a raw material ore.

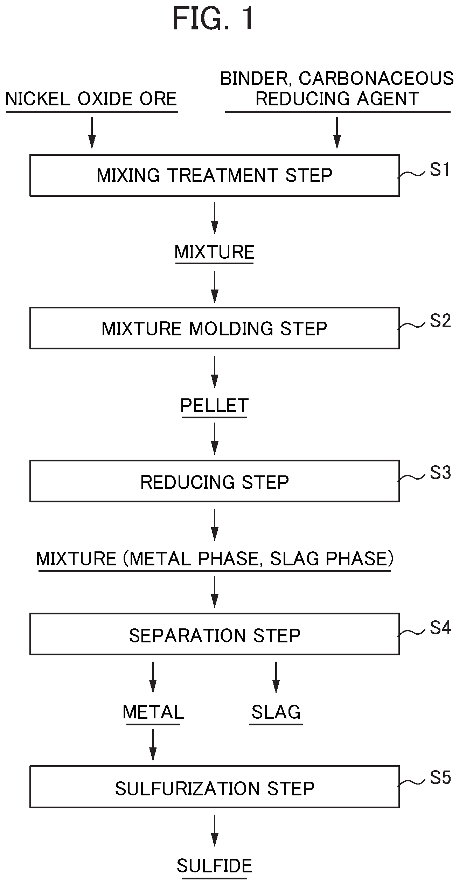

More specifically, as shown in FIG. 1, a sulfide production method according to the present embodiment includes: a mixing treatment step S1 of mixing a nickel oxide ore and a reducing agent to obtain a mixture; a mixture molding step S2 of molding the obtained mixture into a predetermined shape to make pellets (agglomerates); a reducing step S3 of loading the mixture into a reducing furnace and conducting a reduction treatment thereon; a separation step S4 of separating slag from an obtained reduction product to obtain an iron-nickel alloy (ferro-nickel metal); and a sulfurization step S5 of adding a sulfurizing agent to the ferro-nickel metal to obtain a sulfide.

### <2-1. Mixing Treatment Step>

The mixing treatment step S1 mixes raw material powders containing the nickel oxide ore to obtain a mixture. More specifically, in this mixing treatment step S1, a reducing agent, e.g., a carbonaceous reducing agent such as coal and coke, is added to the nickel oxide ore that is the raw material ore, then mixed, and as additives that are optional components, fine powders having a grain size of approximately 0.2 mm to 0.8 mm of iron ore, flux component, binder or the like are mixed to obtain a mixture. Herein, mixing of the raw material powders containing nickel oxide ore can be performed using a mixer or the like.

The nickel oxide ore that is the raw material ore is not particularly limited; however, it is possible to use limonite ore, saprolite ore, etc. For example, the nickel grade in the ore may be 1% by mass or less, and the MgO content may be 2% by mass or more. It should be noted that this nickel oxide ore, as constituent components, contains nickel oxide (NiO) and iron oxide (Fe₂O₃).

In the present embodiment, a specific amount of reducing agent is mixed with the raw material ore to obtain a mixture. It should be noted that this reducing agent is preferably equivalent in particle size and particle distribution with the aforementioned nickel oxide ore that is the raw material ore. This is preferable because, by the particle size or particle size distribution being equal, uniformly mixing becomes easy, and thus the reduction reaction also proceeds uniformly.

When defining the amount of reducing agent required to reduce the nickel oxide and iron oxide constituting the nickel oxide ore without excess or deficiency as 100% by mass, the mixing amount of the reducing agent, i.e. the amount of reducing agent to be contained in the pellets by molding is preferably set to a ratio of 50.0% by mass or less, and more preferably set to 40.0% by mass or less. It should be noted that the amount of reducing agent required to reduce the nickel oxide and iron oxide without excess or deficiency can also be called a total value of chemical equivalents required to reduce the total amount of nickel oxide contained in the pellets into nickel metal and the chemical equivalents required to reduce the iron oxide contained in the pellets into iron metal (hereinafter also referred to as "total value of chemical equivalents").

In this way, when defining the total value of chemical equivalents as 100% by mass, by setting the amount of reducing agent contained in the mixture (mixing amount of reducing agent) as a proportion of 50.0% by mass or less, it is possible to efficiently advance the reducing reaction.

It should be noted that the lower limit value for the mixing amount of reducing agent is not particularly limited; however, when defining the total value of chemical equivalents as 100% by mass, it is preferable to set as a proportion of 20.0% by mass or more, and more preferable to set as a proportion of 23.0% by mass or more. By setting the mixing amount of reducing agent to 20.0% by mass or more in this way, it is possible to easily produce an iron-nickel alloy having high nickel grade.

The iron ore, which is an additive added as an optional component in addition to the nickel oxide ore and reducing agent, is not particularly limited; however, for example, it is possible to use iron ore having an iron grade on the order of 50% by mass or more, hematite obtained from the wet smelting of nickel oxide ore or the like.

In addition, as the binder, for example, bentonite, polysaccharides, resins, water glass, dewatered cake, etc. can be exemplified. In addition, as the flux component, for example, calcium oxide, calcium hydroxide, calcium carbonate, silicon dioxide, etc. can be exemplified.

An example of the composition of part of the raw material powders (mass%) to be mixed in the mixing treatment step S1 is shown in Table 1 below. It should be noted that the composition of the raw material powders is not limited thereto.

**[Table 1]**

| Raw material (mass%) | Ni | MgO | Fe₂O₃ | C |
|---|---|---|---|---|
| Nickel oxide ore | 0.5~1.5 | 2~25 | 30~60 | - |
| Carbonaceous reducing agent | - | - | - | ≒85 |
| Iron ore | - | - | 80~95 | - |

Upon mixing the raw material powders to obtain a mixture, the raw material powders may be kneaded in order to raise the miscibility. Thereby, a shear force is applied to the mixture, breaking apart the aggregates of the carbonaceous reducing agent, raw material powders, etc. and thus allowing more uniform mixing. Furthermore, since the adhesion of individual particles increases, a uniform reduction treatment can be easily carried out.

### <2-2. Mixture Molding Step>

The mixture molding step S2 molds the mixture of the raw material powders obtained in the mixing treatment step S1, and dries as necessary to obtain pellets. The mixture molding step S2 may include an agglomeration treatment step S21 of molding the mixture of raw materials including nickel oxide ore into an agglomerate, and a drying treatment step S22 of drying the obtained agglomerate.

### (1) Agglomeration treatment step

The agglomeration treatment step S21 molds the mixture of raw materials including nickel oxide ore obtained in the mixing treatment step S1 into lumps of predetermined shape and size.

The shape in which molding the mixture, i.e. pellet shape, is sufficient so long as being a shape which can be stacked on the hearth of the reducing furnace; however, it is preferably ellipsoidal, cubic, rectangular parallelepiped, cylindrical, or spherical in shape. By molding the mixture into such shapes, since molding of the mixture will be easy, it is possible to curb the cost associated with molding. In addition, since the shapes to be molded are not complicated, it is possible to reduce the occurrence of pellets with molding defects.

In the agglomeration treatment step S21, for example, it is possible to mold the mixture using a pellet molding machine. The pellet molding machine is not particularly limited; however, it is preferably a machine which can mold by kneading the mixture at high pressure and high shear force. By kneading the mixture at high pressure and high shear force, it is possible to break up aggregates of the mixture of raw material particles, and thus possible to effectively knead; therefore, the strength of the obtained pellets can be enhanced.

In addition, it is also possible to mold using a briquette press. Device selection may be carried out appropriately in consideration of the equipment, pellet strength, yield, etc.

### (2) Drying Treatment Step

The drying treatment step S22 is a step of subjecting the pellets obtained in the agglomeration treatment step S21 to a drying treatment. Herein, the pellets obtained from the agglomeration treatment have moisture excessively contained on the order of 50% by mass, for example. For this reason, if the pellets containing excessive moisture are rapidly heated up to the reduction temperature, the moisture may quickly vaporize and expand, whereby the pellets may be destroyed.

Therefore, by conducting the drying treatment on the obtained pellets, and configuring so that the solid content of the pellets is on the order of 70% by mass, and the moisture is on the order of 30% by mass, for example, in the reduction heat treatment of the reducing step S3 which is the subsequent step, it is possible to prevent the pellets from crumbling, whereby the extraction from the reducing furnace can be prevented from becoming difficult. In addition, since the pellets often enter a sticky state due to excessive moisture, it is possible to facilitate handling by conducting the drying treatment thereon.

More specifically, the drying treatment on the pellets in the drying treatment step S22 is not particularly limited; however, drying is carried out by blowing hot air at 200°C to 400°C onto the agglomerates, for example. It should be noted that it is preferable to set the temperature of the agglomerates at the time of this drying treatment to less than 100°C due to the pellets being unlikely to be destroyed.

Herein, in the case of drying pellets having particularly large volume, cracks or fractures may develop in the agglomerate before or after drying. In the case of the volume of the pellet being large, since the pellets melt and shrink during reduction, cracks or fractures often occur. However, in the case of the volume of the pellet being large, since there is a negligible influence arising from the cracks or fractures, such as an increase in surface area, major problems are unlikely to arise. For this reason, there may be cracks or fractures in the pellets before reduction.

It should be noted that, so long as being a mode in which destruction does not occur in the pellets during the reduction heat treatment or during handling such as the formation of a pellet laminate in the reducing furnace, the drying treatment in the drying treatment step S22 may be omitted.

An example of the composition in terms of solid content (mass%) of the pellets after the drying treatment is shown in Table 2 below. It should be noted that the composition of pellets is not limited thereto.

**[Table 2]**

| Composition of solid content in mixture after drying (mass%) | | | | | | | |
|---|---|---|---|---|---|---|---|
| Ni | Fe₂O₃ | SiO₂ | CaO | Al₂O₃ | MgO | Binder | Other |
| 0.5~1.5 | 30~60 | 8~15 | 4~8 | 1~6 | 2~20 | ≒1 | Balance |

### <2-3. Reducing Step>

In the reducing step S3, the pellets obtained in the mixture molding step S2 are loaded into the reducing furnace, and subjected to reductive heating at a predetermined reduction temperature. More specifically, the obtained pellets (mixture) are placed on the hearth of the reducing furnace, and heated reduction treatment is conducted on the mixture using the reducing furnace. By way of the heated reduction treatment in the reducing step S3, the smelting reaction (reduction reaction) progresses based on the reducing agent in the mixture, and in the mixture, ferro-nickel metal (hereinafter simply referred to as "metal") and ferro-nickel slag (hereinafter simply referred to as "slag") are generated separately. It should be noted that, for convenience, the pellets that are the target of reduction treatment are called the mixture.

It should be noted that it is not limited to a mode that forms the pellets outside of the reducing furnace in advance, and then loads these pellets into the reducing furnace for treatment, and may be configured to load the mixtures individually into the reducing furnace, and mold the pellets inside of this reducing furnace.

In the reduction heat treatment of the heat treatment, the nickel oxide and iron oxide contained in the pellets are reduced and metallized near the surface of the pellets where the reduction reaction tends to progress first, in a short time on the order of 1 minute, for example, and make an iron-nickel alloy that forms a shell (hereinafter also referred to as "husk"). On the other hand, within the shell, the slag component in the pellet gradually melts accompanying the formation of this shell, and a liquid-phase slag is generated. Thereby, in one pellet, the metal consisting of an alloy such as ferro-nickel or a metal (hereinafter simply referred to as "metal") and a slag consisting of oxides (hereinafter simply referred to as "slag") are generated separately.

Then, after approximately 10 minutes of the reduction heat treatment have elapsed, the carbon component of surplus carbonaceous reducing agent that does not contribute to the reduction reaction is incorporated into the iron-nickel alloy and causes the melting point to decrease. As a result, the iron-nickel alloy melts to become a liquid phase.

In the present embodiment, the reduction product after performing the reduction heat treatment is a mixture of large lumps of metal and slag. The metal and slag already generated separately will not blend together, and by subsequently cooling, form a mixed material coexisting as the separate phases of a metal solid phase and a slag solid phase. For this reason, since it becomes possible to simply separate the metal containing nickel which is the recovery target, and the slag that does not substantially contain nickel, for example, even in a case of using low-grade nickel oxide ore as the smelting target, it is possible to obtain a metal having relatively high nickel concentration.

It should be noted that the volume of this mixed material, when comparing with pellets prior to the reduction heat treatment, shrinks to a volume of about 50% by volume to 60% by volume.

The reducing furnace used in the reduction heat treatment is not particularly limited; however, it is preferable to use a moving hearth furnace. By utilizing a moving hearth furnace as the reducing furnace, it is possible to efficiently treat the mixture using the reducing furnace. In addition, by using a moving hearth furnace, the reduction reaction progresses continuously, it is possible to complete the reaction with a single piece of equipment, and control of the treatment temperature can be carried out more precisely than when performing the treatment in each step using separate furnaces. Furthermore, by decreasing the heat loss between each treatment, more efficient operation is possible. In other words, in the case of carrying out reaction using separate furnaces, upon moving the pellet laminate from one furnace to another furnace, the temperature drops and heat loss occurs, leading to a change in reaction atmosphere, whereby the reaction does not progress immediately when reloaded into a furnace. In contrast, by carrying out each treatment with a single piece of equipment using a moving hearth furnace, together with the heat loss being decreased, since it is possible to precisely control the atmosphere in the furnace, the reactions can be made to progress more effectively. In light of these matters, an iron-nickel alloy having a large content of nickel can be more effectively obtained.

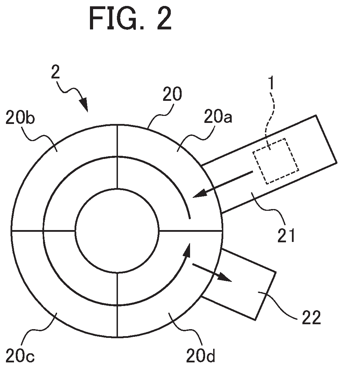

The moving hearth furnace is not particularly limited; however, for example, the rotary hearth furnace 2 such as that shown in FIG. 2, which is circular and is segmented into a plurality of treatment chambers 20a to 20d, can be used. The rotary hearth furnace 2 performs each treatment in a respective region, while rotating in a predetermined direction. In this rotary hearth furnace, by controlling the time (movement time, rotation time) for passing through each region, it is possible to adjust the treatment temperature in each region, and the mixture constituting the pellet laminate 1 undergoes the smelting treatment every time the rotary hearth furnace makes one rotation. Herein, the rotary hearth furnace 2 may be configured so that a preheat chamber 21 is provided outside the furnace, and the pellet laminate 1 moves to the preheat chamber 21 and is preheat treated, then after this preheat treatment, the pellet laminate 1 is sequentially moved within the rotary hearth furnace 2. In addition, the rotary hearth furnace 2 may be configured so that a cooling chamber 40 is provided outside the furnace, and the reduction product obtained through the treatment chambers 20a to 20d is subjected to cooling treatment in the cooling chamber 40. It should be noted that the moving hearth furnace may be a roller hearth kiln or the like.

No particular limitations are imposed on the heating means of the reducing furnace; however, it may be a burner, or may be a device using electricity or the like. It is preferably a burner due to being able to carry out the heated reduction treatment effectively on the mixture in a short time. In addition, in the case of using a reducing furnace having a burner, for example, LPG, LNG, coal, coke, pulverized coal, etc. can be used as the fuel. The costs of these fuels is very inexpensive, and thus, compared to an electric furnace or the like, it is possible to curb to a remarkably low cost, even with regards to the equipment cost and maintenance cost.

The temperature in the reduction treatment (reduction temperature) is not particularly limited; however, it is preferably set to a range of 1250°C or more and 1450°C or less, and more preferably set to a range of 1300°C or more and 1400°C or less. By reducing in such a temperature range, it is possible to have the reduction reaction occur uniformly, and a ferro-nickel metal for which variation in quality is suppressed can be produced. In addition, by reducing at a reduction temperature in the more preferred range of 1300°C or more and 1400°C or less, it is possible to carry out the desired reduction reaction in a relatively short time.

The time of the reduction treatment (treatment time) is set according to the temperature of the reducing furnace; however, it is preferably 10 minutes or more, and more preferably 15 minutes or more. On the other hand, the upper limit for the time for which performing the reduction heat treatment may be set to 50 minutes or less, or 40 minutes or less, from the viewpoint of curbing an increase in production cost.

It should be noted that the cumulative heat quantity required in reduction, which is the value reached by multiplying the numerical values of the reduction temperature (°C) and the reduction time (min.), is preferably in the range of 20000 (°C x min.) or more and 40000 (°C x min.) or less. By conducting the reduction treatment with this heat quantity, it is possible to efficiently produce a high-quality metal.

### <2-4. Separation Step>

In the separation step S4, the metal is recovered by separating the metal and slag generated in the reducing step S3. More specifically, the metal phase is separated and recovered from the mixed material containing the metal phase (metal solid phase) and slag phase (slag solid phase) obtained by the reduction heat treatment on the pellets.

Prior to subjecting to the separation step of separating the metal and slag from the reduction product, the reduction product in the molten state may be cooled to within a viscosity range such that no hinderance arises in separation of the metal and slag, and the reduction product in the cooled state may be provided to the separation step. For the cooling of the reduction product, a method naturally cooling the reduction product can be exemplified.

As a method of separating the metal phase and slag phase from the mixed material of the metal phase and slag phase obtained as solids, for example, in addition to removing unwanted materials by sieving, it is possible to use methods such as separating by specific gravity, and separating by magnetic force.

In addition, the obtained metal phase and slag phase can be easily separated due to having poor wettability, and thus, relative to the large mixed material obtained by the aforementioned reducing step S3, by providing a predetermined elevation difference and allowing to drop, for example, or applying an impact such as applying predetermined vibration upon sieving, it is possible to easily separate the metal phase and slag phase from this mixed material.

The metal phase is recovered by separating the metal phase and slag phase in this way. It should be noted that the slag may be entrained in the metal. It is not necessary to separate the metal and slag perfectly in the recovery step, and slag on the order of several percent such that does not lower the metal recovery rate may be entrained, for example.

### <2-5. Sulfurization Step>

The sulfurization step S5 obtains a sulfide containing nickel by sulfurizing a metal containing nickel, which is the recovery target.

By performing the sulfurization step, even in the case of using a low-grade nickel oxide ore as the smelting target, for example, it will be possible to obtain a sulfide of relatively high nickel concentration. The metal sulfurization reaction is a reversible reaction, and the sulfurization reaction from the metal to sulfide becomes dominant when at least a predetermined amount of the sulfurizing agent is present in the molten metal. At this time, nickel is first sulfurized, and other metals such as iron are sulfurized after the nickel has been sulfurized. It is thereby possible to cause the metal containing metals different from nickel such as iron to separate from the nickel sulfide, by separating the nickel sulfide from the metal. By recovering this nickel sulfide, it becomes possible to obtain a sulfide having a relatively high nickel concentration.

It should be noted that the sulfurization reaction from metal to sulfide, for example, in the case of adding the sulfurizing agent to the metal at 1600°C or less, can be made to rapidly progress by controlling the furnace internal atmosphere to 0.01 atm or more, more preferably 0.1 atm or more, in terms of sulfur partial pressure.

The sulfurizing agent is not particularly limited, and a solid form of sulfur or sulfur gas can be exemplified. Thereamong, it is preferable to use a sulfur gas as the sulfurizing agent. By using a sulfur gas as the sulfurizing agent, it is possible to supply the sulfur to the metal and make react efficiently. Additionally, sodium sulfide, sodium hydrosulfide, and nickel sulfide are also useable as the sulfurizing agent. The nickel sulfide is desirably one that contains 0.67 atoms or more of sulfur relative to 1 atom of nickel, for example, and compounds such as NiS, Ni₉S₈ and NiS₂ can be exemplified.

At this time, it is preferable to melt the obtained metal and supply the sulfurizing agent to the molten metal. By having the sulfurization reaction progress on the molten metal, since the nickel sulfide rises up from the molten metal to form a sulfide layer as an upper layer of the molten metal, it becomes possible to easily separate the metal containing a different metal from nickel such as iron.

As a method for melting the obtained metal, a method of melting the ferro-nickel metal using a melting furnace that employs a burner can be exemplified. By melting the ferro-nickel metal using a melting furnace that employs a burner, and supplying the sulfurizing agent to the molten metal thus melted to sulfurize the metal, the nickel sulfide separates and rises up from the molten metal to form a sulfide layer as an upper layer of the molten metal, whereby it is possible to separate the metal containing other metals such as iron. By recovering this sulfide layer containing nickel, it becomes possible to obtain a sulfide having a relatively high nickel concentration.

At this time, by using a melting furnace that employs a burner, it becomes possible to easily heat and melt the metal. Additionally, with a burner furnace, the maintenance is very easy, continuous operation can also be effectively performed, and thus the operational efficiency can be improved. In addition, since the structure is simple and there is little accessory equipment compared to an Elkem process electric furnace, it is possible to reduce the operating cost, cost of regular maintenance, etc. Furthermore, the burner furnace can simplify the power generation equipment, and is more favorable in onsite smelting carrying out the smelting treatment near a mine. In addition, the Elkem process is very costly for heating due to using a great amount of electricity; however, for a burner, it is possible to produce sulfides inexpensively due to the fuel cost being cheap.

The fuel of the burner is not particularly limited, and it may be a fuel including at least one selected from coal, charcoal, coke and natural gas. Natural gas is preferable due to having good combustion properties, and temperature control also being easy.

In the case of sulfurizing the metal using a melting furnace that employs a burner, it is desirable to form a sulfide layer as an upper layer of the molten metal in the sulfurization step. When the sulfide layer is the upper layer of the molten metal, since the sulfide layer is located between the molten metal and the gas phase part, the molten metal prior to reaction is unlikely to come into contact with oxygen (air remaining uncombusted among the air for combustion, etc.), and moreover, since sulfur gas and sulfur dioxide evolve from the sulfide layer after the sulfurization reaction and keep away the oxygen, the sulfide layer itself is also unlikely to be oxidized. For this reason, in a general sulfurization treatment, it is made possible to effectively suppress the nickel (nickel metal) contained in the molten metal prior to reaction and the nickel (nickel sulfide) contained in the sulfide after sulfurization reaction from being replaced by nickel oxide, and thus nickel can be recovered at high yield as nickel sulfide.

It should be noted that, by controlling the added amount of sulfurizing agent so as to be proportionate with the amount of molten metal, it is possible to form a sulfide layer between the molten metal and gas phase part. To abundantly obtain sulfide rich in nickel sulfide, it is configured so that the sulfur fraction supplied from the sulfurizing agent is 1.0 or more and 3.0 or less by S/Ni mole ratio (S[mol]/Ni[mol]), and preferably 1.0 or more and less than 1.5.

In addition, in the case of contact of the metal in the melting furnace with oxygen being unavoidable, iron oxide may be produced from the upper layer of the metal coming into contact with oxygen. In this case, it is desirable to add a flux to the iron oxide as needed to cause the iron oxide to melt. It is thereby possible to efficiently remove the iron oxide melted by discharging the iron oxide as slag from a tap.

In addition, as a method of melting the obtained metal, a method of melting the ferro-nickel metal using an arc furnace can be exemplified. An arc furnace is a furnace that heats by using the heat generated when electric current flows between electrodes, and such an arc furnace is an exceptionally superior furnace for raising the temperature of the metal to melt and causing a rapid reaction with sulfur. Since the arc furnace does not require oxygen or air as a heat source, oxidation of the metal containing nickel can be avoided, and thus the sulfide is obtained at high yield.

As the arc furnace, there are furnaces using direct arc heating (direct arc furnace) and furnaces using indirect arc heating (indirect arc furnace), and the direct arc furnace is preferably used. Since the electrodes and metal directly contact if using a direct arc furnace, the metal easily reaches high temperature, and temperature control is also easy.

In addition, there is a direct current arc furnace (DC) that uses an arc generated based on DC current in the arc furnace, and an alternating current arc furnace (AC arc furnace) that uses an arc generated between each electrode and a heating target using AC current, and it is particularly preferable to use a three-phase electrode alternating current arc furnace equipped with three electrodes corresponding to three-phase AC current.

Upon melting the ferro-nickel with a melting furnace using a burner or an arc furnace, oxygen may be blown into the molten metal. The iron contained in the molten metal will thereby be oxidized, and control of the temperature of the molten metal becomes easy. Furthermore, by the iron contained in the molten metal oxidizing from blowing oxygen into the molten metal, it is possible to adjust the nickel content in the obtained the sulfide. It should be noted that the nickel content in the sulfide may also be adjusted by controlling the added amount (supplied amount) of sulfurizing agent to be added, or may be adjusted by combining these.

The sulfide of the molten metal on which sulfurization treatment was conducted can be cooled by discharging from a tap to obtain the sulfide.

### <<3. Treatment Method of Nickel Oxide Ore>>

The aforementioned sulfide production method can also be defined as a treatment method for nickel oxide ore. By mixing an oxidized ore and reducing agent to obtain a mixture, and sulfurizing the metal obtained by conducting reduction treatment on the mixture to obtain a sulfide, it becomes possible to obtain a sulfide having a high nickel concentration. For this reason, if recovering nickel from the sulfide treated by the treatment method for nickel oxide ore according to the present embodiment, even if the nickel oxide ore is a low-grade nickel oxide ore, it is possible to efficiently recover nickel in the form of a sulfide.

### <<4. Nickel Smelting Method>>

The nickel smelting method according to the present embodiment includes a wet-process step of producing a sulfide from the aforementioned sulfide production method, and obtaining a leachate from the obtained sulfide. By subjecting to the wet-process step, it is possible to further separate impurities.

As an example of the wet-process step, a chlorine leaching process can be exemplified that causes a metal such as nickel to leach into an aqueous solution using chlorine gas with a sulfide containing nickel obtained in a sulfurization step as a raw material, and then generating an aqueous nickel chloride solution as a chlorine leachate.

In addition, together with the sulfide containing nickel obtained in the sulfurization step S5, a cementation residue generated in a cementation step of removing copper ions, which are an impurity contained in the copper-containing aqueous nickel chloride solution of the nickel wet smelting process, may be supplied to this wet-process step (chlorine leaching step).

When the sulfide is fed to the chlorine leaching step, the metal component such as nickel sulfide (NiS) contained in the sulfide undergo oxidative leaching. An aqueous nickel chloride solution, which is the chlorine leachate, is thereby generated.

It should be noted that, although a chlorine leaching step that leaches a metal such as nickel using chlorine gas from the sulfide containing nickel obtained in the sulfurization step S5 has been described as an example of a wet-process step, not limiting to chlorine gas, a leachate may be obtained by a process that causes a metal such as nickel to leach using an acid.

### EXAMPLES

Hereinafter, a more specific explanation of the present invention will be provided by showing Examples; however, the present invention is not to be limited in any way to the following Examples.

### <<Example 1>>

### (Mixing of Raw Material Powder)

For each sample, a nickel oxide ore (nickel grade = 0.91% by mass, MgO content = 15.3% by mass) as a raw material ore, silica sand and limestone as flux components, binder, and reducing agent (coal powder, carbon content: 41% by mass, average particle size: approximately 130 µm) were mixed using a mixer while adding an appropriate amount of water to obtain a mixture.

Such ores having a low nickel grade and high MgO content cannot be treated by an existing smelting method due to being technically difficult or the commercial cost not being worth it. Pulverized coal was used as the reducing agent and contained in 35%, when defining the amount required in order to reduce the nickel oxide and iron oxide (Fe₂O₃) contained in the nickel oxide ore as the raw material ore without excess or deficiency as 100%.

### (Molding of Mixture)

Next, the mixture obtained for each sample was molded into pellet form by a pelletizer. Subsequently, the obtained pellets were sieved to obtain pellets with a diameter of 15+/- 0.4 mm, and used in experiments.

Next, on each of the samples, hot air at 200°C to 250°C was blown to conduct drying treatment so that the solid content reached about 70% by weight and water content reached about 30% by weight. The solid content composition (excluding carbon) of the mixture after the drying treatment (pellets) is shown in the following Table 3.

**[Table 3]**

| Ni | Fe₂O₃ | SiO₂ | CaO | Al₂O₃ | MgO | Other |
|---|---|---|---|---|---|---|
| 0.6 | 43.5 | 14.3 | 5.1 | 2.5 | 12.7 | Binder, carbonaceous reducing agent, etc. |

### (Reduction Heat Treatment on Pellets)

Pellets of the sample after drying treatment were each loaded into a reducing furnace establishing a nitrogen atmosphere substantially free of oxygen.
It should be noted that the temperature condition during loading into the reducing furnace was set to 500+/-20°C.

Next, reduction heat treatment was conducted on the pellets of the mixture at the temperatures and times shown in Table 4. After the reduction treatment, it was rapidly cooled to room temperature in a nitrogen atmosphere, and the samples were taken out into atmospheric air.

Herein, the loading of pellets to the reducing furnace was performed by spreading out the ash (main component is SiO₂, and containing trace amounts of oxides such as Al₂O₃ and MgO as other components) on the hearth of the reducing furnace in advance, and then placing the pellets thereon.

For each sample after the reduction heat treatment, the nickel metallization rate, and nickel content in metal were calculated by analyzing with an ICP spectroscopic analyzer (SHIMAZU model S-8100).

The nickel metallization rate and nickel content in the metal were calculated using the following formulas. 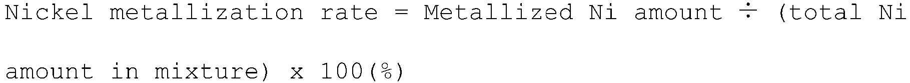 Nickel metallization rate = Metallized Ni amount ÷ (total Ni amount in mixture) x 100(%) 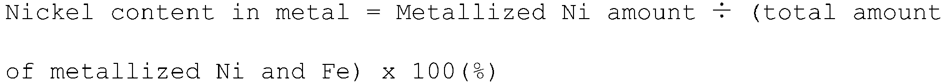 Nickel content in metal = Metallized Ni amount ÷ (total amount of metallized Ni and Fe) x 100(%)

In addition, for each sample after the reduction heat treatment, the metal was recovered by magnetic sorting after pulverizing with a wet process. Then, the nickel metal recovery rate was calculated from the content of nickel oxide ore in the pellet laminate loaded to the reducing furnace, the nickel content in the nickel oxide ore, and the nickel amount recovered.

The nickel metal recovery rate was calculated using the following formula. 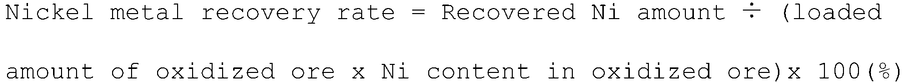 Nickel metal recovery rate = Recovered Ni amount ÷ (loaded amount of oxidized ore x Ni content in oxidized ore)x 100(%)

The nickel metallization rate, nickel content in the metal, and nickel metal recovery rate for each sample are shown in Table 4 below.

**[Table 4]**

| Reduction temperature (°C) | Reduction time (min.) | Ni metallization rate (%) | Ni content in metal (%) | Metal recovery rate (%) |
|---|---|---|---|---|
| 1380 | 30 | 97.2 | 52.6 | 95.7 |

As is evident from the above table, even in the case of using low-grade nickel oxide ore, by conducting reduction treatment on the mixture containing oxidized ore and reducing agent to obtain the metal, it is found to be possible to obtain metal having a relatively high nickel concentration (i.e. high nickel grade).

### (Sulfurization Step)

The metal obtained in the above reducing step was melted with a melting furnace that employs a burner, and a sulfur gas was supplied as the sulfurizing agent to the molten metal in the molten state to obtain a sulfide. At this time, the sulfur gas was supplied, controlling so that the sulfur partial pressure in the furnace reached 1 atm. Coal, charcoal, coke and natural gas were used as the heating fuel of the melting furnace. The natural gas burns the most stably, and thus temperature control was easy. The sulfurization step was completed at the moment when the consumed sulfur amount reached 1:1 by number of atoms with the nickel amount existing in the furnace.

The nickel grade (Ni content) for the obtained sulfide was calculated by analyzing with an ICP spectroscopic analyzer (SHIMAZU model S-8100). The nickel grade in the sulfide was 63 to 66%, and the sulfur was 21 to 24%. In this way, by supplying the metal obtained in the reducing step to the sulfurization step, it is found to be possible to separate metals differing from the recovery target such as iron, and obtain a sulfide having high nickel concentration. Then, by subjecting this sulfide to the wet-process step that brings into contact with an acid solution, even if the oxidized ore that is the processing target is low grade, it is surmised as possible to efficiently recover the nickel, which is the recovery target.

### <<Example 2>>

### (Mixture of Raw Material Powder)

For each sample, a nickel oxide ore (nickel grade = 0.91% by mass, MgO content = 15.3% by mass) as a raw material ore, silica sand and limestone as flux components, binder, and carbonaceous reducing agent (coal powder, carbon content: 41% by weight, average particle size: approximately 130 µm) were mixed using a mixer while adding an appropriate amount of water to obtain a mixture.

Such ores having a low nickel grade and high MgO content cannot be treated by an existing smelting method due to being technically difficult or the commercial cost not being worth it. Pulverized coal was used as the carbonaceous reducing agent and contained in 35%, when defining the amount required in order to reduce the nickel oxide and iron oxide (Fe₂O₃) contained in the nickel oxide ore as the raw material ore without excess or deficiency as 100%.

### (Molding of Mixture)

Next, the mixture obtained for each sample was molded into pellet form by a pelletizer. Subsequently, the obtained pellets were sieved to obtain pellets with a diameter of 15 +/-0.4 mm, and used in experiments.

Next, on each of the samples, hot air at 200°C to 250°C was blown to conduct drying treatment so that the solid content reached about 70% by weight and water content reached about 30% by weight. The solid content composition (excluding carbon) of the mixture after the drying treatment (pellets) is shown in the following Table 5.

**[Table 5]**

| Ni | Fe₂O₃ | SiO₂ | CaO | Al₂O₃ | MgO | Other |
|---|---|---|---|---|---|---|
| 0.6 | 43.5 | 14.3 | 5.1 | 2.5 | 12.7 | Binder, carbonaceous reducing agent, etc. |

### (Reduction Heat Treatment on Pellets)

Pellets of the sample after drying treatment were each loaded into a reducing furnace establishing a nitrogen atmosphere substantially free of oxygen. It should be noted that the temperature condition during loading into the reducing furnace was set to 500+/-20°C.

Next, reduction heat treatment was conducted on the pellets of the mixture at the temperatures and times shown in Table 6. After the reduction treatment, it was rapidly cooled to room temperature in a nitrogen atmosphere, and the samples were taken out into atmospheric air.

Herein, the loading of pellets to the reducing furnace was performed by spreading out the ash (main component is SiO₂, and containing trace amounts of oxides such as Al₂O₃ and MgO as other components) on the hearth of the reducing furnace in advance, and then placing the pellets thereon.

For each sample after the reduction heat treatment, the nickel metallization rate, and nickel content in metal were calculated by analyzing with an ICP spectroscopic analyzer (SHIMAZU model S-8100).

**[Table 6]**

| Sample | Reduction temperature (°C) | Reduction time (min.) | Ni metallization rate (%) | Ni content in metal (%) | Metal recovery rate (%) |
|---|---|---|---|---|---|
| 1 | 1380 | 30 | 97.2 | 52.8 | 95.3 |

As is evident from the above table, even in the case of using low-grade nickel oxide ore, by conducting reduction treatment on the mixture containing oxidized ore and reducing agent to obtain the metal, it is found to be possible to obtain metal having a relatively high nickel concentration (i.e. high nickel grade).

### (Sulfurization Step)

The metal obtained in the above reducing step was melted in an arc furnace, and sulfur gas was supplied as the sulfurizing agent to the molten metal in the molten state to sulfurize, thereby obtaining the sulfide. At this time, the sulfur gas was supplied, controlling so that the sulfur partial pressure in the furnace reached 1 atm. The sulfurization step was completed at the moment when the consumed sulfur amount reached 1:1 by number of atoms with the nickel amount existing in the furnace.

The nickel grade (Ni content) for the obtained sulfide was calculated by analyzing with an ICP spectroscopic analyzer (SHIMAZU model S-8100). The nickel grade in the sulfide was 67%, and the sulfur was 24%. In this way, by supplying the metal obtained in the reducing step to the sulfurization step, it is found to be possible to separate metals differing from the recovery target such as iron, and obtain a sulfide having relatively high nickel concentration. Then, by subjecting this sulfide to the wet-process step that brings into contact with an acid solution, even if the oxidized ore that is the processing target is low grade, it is surmised as possible to efficiently recover the nickel, which is the recovery target.

### <<Example 3>>

### (Mixing of Raw Material Powder)

For each sample, a nickel oxide ore (nickel grade = 0.90% by mass, MgO content = 15.5% by mass) as a raw material ore, silica sand and limestone as flux components, binder, and carbonaceous reducing agent (coal powder, carbon content: 41% by weight, average particle size: approximately 130 µm) were mixed using a mixer while adding an appropriate amount of water to obtain a mixture.

Such ores having a low nickel grade and high MgO content cannot be treated by an existing smelting method due to being technically difficult or the commercial cost not being worth it. Pulverized coal was used as the carbonaceous reducing agent and contained in 35%, when defining the amount required in order to reduce the nickel oxide and iron oxide (Fe₂O₃) contained in the nickel oxide ore as the raw material ore without excess or deficiency as 100%.

### (Molding of Mixture)

Next, the mixture obtained for each sample was molded into pellet form by a pelletizer. Subsequently, the obtained pellets were sieved to obtain pellets with a diameter of 15 +/-0.4 mm, and used in experiments.

Next, on each of the samples, hot air at 200°C to 250°C was blown to conduct drying treatment so that the solid content reached about 70% by weight and water content reached about 30% by weight. The solid content composition (excluding carbon) of the mixture after the drying treatment (pellets) is shown in the following Table 7.

**[Table 7]**

| Ni | Fe₂O₃ | SiO₂ | CaO | Al₂O₃ | MgO | Other |
|---|---|---|---|---|---|---|
| 0.6 | 43.5 | 14.3 | 5.1 | 2.5 | 12.7 | Binder, carbonaceous reducing agent, etc. |

### (Reduction Heat Treatment on Pellets)

Pellets of the sample after drying treatment were each loaded into a reducing furnace establishing a nitrogen atmosphere substantially free of oxygen. It should be noted that the temperature condition during loading into the reducing furnace was set to 500+/-20°C.

Next, reduction heat treatment was conducted on the pellets of the mixture at the temperatures and times shown in Table 8. After the reduction treatment, it was rapidly cooled to room temperature in a nitrogen atmosphere, and the samples were taken out into atmospheric air.

Herein, the loading of pellets to the reducing furnace was performed by spreading out the ash (main component is SiO₂, and containing trace amounts of oxides such as Al₂O₃ and MgO as other components) on the hearth of the reducing furnace in advance, and then placing the pellets thereon.

For each sample after the reduction heat treatment, the nickel metallization rate, and nickel content in metal were calculated by analyzing with an ICP spectroscopic analyzer (SHIMAZU model S-8100).

The nickel metallization rate, nickel content in the metal, and nickel metal recovery rate for each sample are shown in Table 8 below.

**[Table 8]**

| Reduction temperature (°C) | Reduction time (min.) | Ni metallization rate (%) | Ni content in metal (%) | Metal recovery rate (%) |
|---|---|---|---|---|
| 1380 | 30 | 97.4 | 52.9 | 95.5 |

As is evident from the above table, even in the case of using low-grade nickel oxide ore, by conducting reduction treatment on the mixture containing oxidized ore and reducing agent to obtain the metal, it is found to be possible to obtain metal having a relatively high nickel concentration (i.e. high nickel grade).

### (Sulfurization Step)

The metal obtained in the above reducing step was melted in the arc furnace, and sulfurizing agent was supplied to the molten metal in the molten state to obtain a sulfide. A solid form of sulfur and sulfur gas were used as the sulfurizing agent. The product of using a solid form of sulfur as the sulfurizing agent was defined as Sulfide 1, and the product of using sulfur gas as the sulfurizing agent was defined as Sulfide 2.

At this time, the sulfurizing agent was supplied, controlling so that the sulfur partial pressure in the furnace reached 1 atm. The amount of sulfurizing agent used when obtaining Sulfide 2 was approximately 90% of the amount of sulfurizing agent used when obtaining Sulfide 1. The nickel grades of Sulfide 1 and Sulfide 2 were both 64 to 66%, and the sulfur was 22 to 24%. In this way, by supplying the metal obtained in the reducing step to the sulfurization step, it is found to be possible to separate metals differing from the recovery target such as iron, and obtain a sulfide having high nickel concentration. Then, by subjecting this sulfide to the wet-process step that brings into contact with an acid solution, even if the oxidized ore that is the processing target is low grade, it is surmised as possible to efficiently recover the nickel, which is the recovery target.

### EXPLANATION OF REFERENCE NUMERALS

- 1: pellet
- 2: rotary hearth furnace
- 20a ~ 20d: treatment chambers
- 21: preheat chamber
- 40: cooling chamber

## Claims

1. A sulfide production method of producing a sulfide from nickel oxide ore, the method comprising:
a mixing treatment step of mixing a nickel oxide ore and a reducing agent to obtain a mixture;
a reducing step of loading the mixture into a reducing furnace, and conducting a reduction treatment on the mixture to obtain a reduction product containing a metal, which is a ferro-nickel metal, and a slag, which is an oxide;
a separation step of separating the metal and the slag from the reduction product; and
a sulfurization step of adding a sulfurizing agent to the metal obtained in the separation step to obtain a sulfide containing nickel.

2. The sulfide production method according to claim 1, wherein the sulfurization step forms a sulfide layer between a molten metal and a gas-phase portion, by melting the metal using a melting furnace that employs a burner, and adding a sulfurizing agent to a molten metal.

3. The sulfide production method according to claim 1, wherein the sulfurization step melts the metal using an arc furnace, and adds a sulfurizing agent to a molten metal.

4. The sulfide production method according to claim 2, wherein the sulfurization step uses a fuel containing at least one selected from charcoal, coke and natural gas as a fuel of the burner.

5. The sulfide production method according to any one of claims 1 to 3, wherein the sulfurization step uses a solid form or sulfur gas as the sulfurizing agent.

6. The sulfide production method according to any one of claims 1 to 3, wherein the reducing step loads the mixture into a reducing furnace and conducts a reduction treatment on the mixture to obtain a ferro-nickel metal, and supplies the ferro-nickel metal to the sulfurization step.

7. A nickel smelting method comprising:
a mixing treatment step of mixing a nickel oxide ore and a reducing agent to obtain a mixture;
a reducing step of loading the mixture into a reducing furnace, and conducting a reduction treatment on the mixture to obtain a reduction product containing a metal, which is a ferro-nickel metal, and a slag, which is an oxide;
a separation step of separating the metal and the slag from the reduction product; and
a sulfurization step of adding a sulfurizing agent to the metal obtained in the separation step to obtain a sulfide; and
a wet-process step of obtaining a leachate from the sulfide obtained in the sulfurization step.
